# EUROPEAN PATENT APPLICATION

(11) **EP 4 210 157 A1**
(43) Date of publication of application: **12.07.2023**
(21) Application number: 23151151.0
(22) Date of filing: 11.01.2023
(51) Int. Cl.: H01M 50/107, H01M 50/152, H01M 50/167, H01M 50/184, H01M 10/04

(54) **CYLINDRICAL SECONDARY BATTERY**

(30) Priority: 11.01.2022 KR 20220004074
(71) Applicant: Samsung SDI Co., Ltd., Yongin-si, Gyeonggi-do 17084 (KR)
(72) Inventor: CHOI, Woo Hyuk, 17084 Yongin-si (KR); LEE, Tae Yoon, 17084 Yongin-si (KR); KWON, Jun Hwan, 17084 Yongin-si (KR); YANG, Jun Ho, 17084 Yongin-si (KR); KIM, Joung Ku, 17084 Yongin-si (KR); PARK, Hyun Suk, 17084 Yongin-si (KR); YU, Gwan Hyeon, 17084 Yongin-si (KR); LEE, Dong Sub, 17084 Yongin-si (KR)
(74) Representative: Marks & Clerk LLP

(57) **Abstract**

An embodiment of the present disclosure relates to a cylindrical secondary battery, which includes: cylindrical can having a circular bottom portion, a side portion extending from the bottom portion, a beading part that is concavely formed at one end of the side portion, a crimping part that is formed by bending the end of the side portion; an electrode assembly accommodated in the can; and a cap assembly that seals the can and has a gas for insulation from the can, wherein the upper portion of the gasket in a direction away from the electrode assembly has a smaller thickness than the lower portion in a direction of the electrode assembly. According to an embodiment of the present disclosure, by improving the shape of the gasket, parts, such as a cap-up, a safety vent, etc., are not deformed by pressure when a crimping part and a beading part are formed on the can for assembling the cap assembly. Accordingly, the stability of the secondary battery may be improved.

## Description

### BACKGROUND

### 1. Field

An embodiment of the present disclosure relates to a cylindrical secondary battery having an improved cap assembly structure.

### 2. Description of the Related Art

In general, a cylindrical secondary battery includes a cylindrical electrode assembly, a cylindrical can for accommodating the electrode assembly and an electrolyte, and a cap assembly coupled to an upper opening of the can to seal the can and allowing the current generated in the electrode assembly to flow to an external device.

The cap assembly is fixed to the can by forming a crimping part on the top of the can, seating the cap assembly on the crimping part, and forming a beading part to fix the cap assembly. Accordingly, the cap assembly includes a gasket for insulation from the can. However, when the beading part is formed, the cap assembly may be deformed while being pressed by the pressure applied to the cap assembly, and thus a cap-up and a safety vent may be deformed.

The above information disclosed in this Background section is only for enhancement of understanding of the background of the invention and therefore it may contain information that does not constitute prior art.

### SUMMARY

The present disclosure provides a cylindrical secondary battery having an improved structure of a cap assembly, thereby preventing deformation of parts when assembling the cap assembly.

A cylindrical secondary battery according to an embodiment of the present disclosure may include: a cylindrical can having a circular bottom portion, a side portion extending from the bottom portion, a beading part that is concavely formed at one end of the side portion, a crimping part that is formed by bending the end of the side portion; an electrode assembly accommodated in the can; and a cap assembly that seals the can and has a gas for insulation from the can, wherein the upper portion of the gasket in a direction away from the electrode assembly has a smaller thickness than the lower portion in a direction of the electrode assembly.

The gasket may have a shape in which the thickness of the upper portion decreases toward the end portion.

The gasket may have a ring-shaped body, a connection portion extending from the body, and an extension portion extending downward from the connection portion, and the thickness of the body decreases toward an end portion.

The cap assembly may include a cap-up disposed between the crimping part and the beading part, a safety vent disposed below the cap-up, and a cap-down disposed below the safety vent and electrically connected to the electrode assembly, and the gasket may insulate the safety vent and the cap-up from the can.

The lower surface of the edge of the safety vent may be in close contact with the upper surface of the cap-up, and the gasket may be bent to surround the edge of the safety vent.

The gasket may have an inclined surface that is chamfered on an inner circumferential surface of the body.

The inclined surface may be in close contact with the upper surface of the edge of the safety vent.

A bending position (F) of the bent upper surfaces of the safety vent, at which the straight section starts, may correspond to a starting position of the inclined surface.

At least some of the above features that accord with the invention and other features according to the invention are set out in the claims.

### BRIEF DESCRIPTION OF DRAWINGS

FIG. 1 is a longitudinal cross-sectional view illustrating a general cylindrical secondary battery.
FIG. 2A is a partial cross-sectional view illustrating a direction of pressure applied when assembling a cap assembly according to FIG. 1.
FIG. 2B is a partial sectional view showing the pressure distribution according to FIG. 2A in detail.
FIG. 3 is a CT image showing a deformation state after assembling the cap assembly according to FIG. 1.
FIG. 4 is a partial cross-sectional view illustrating compression areas of the cap assembly according to gasket positions according to FIG. 1.
FIG. 5 is a partial perspective view for comparing a gasket according to FIGS. 1 to 4 and a gasket according to an embodiment of the present disclosure.
FIG. 6 is a partial perspective view showing a detailed structure of a gasket according to an embodiment of the present disclosure.
FIG. 7 is a view comparing bending states of the gasket according to FIGS. 1 to 4 and the gasket according to an embodiment of the present disclosure.
FIG. 8 is a CT image showing a state after assembling a cap assembly according to an embodiment of the present disclosure.

### DETAILED DESCRIPTION

Examples of the present disclosure are provided to help to explain the present disclosure to those skilled in the art, and the following examples may be modified in various other forms. The present disclosure, however, may be embodied in many different forms and should not be construed as being limited to the example (or exemplary) embodiments set forth herein. Rather, the scope of the disclosure is defined by the claims.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below. In embodiments, the terms "lower" and "upper" used with respect to features in the cap assembly, may refer to features which are respectively closer or further from the electrode assembly.

Hereinafter, a general cylindrical secondary battery will be briefly described with reference to the accompanying drawings.

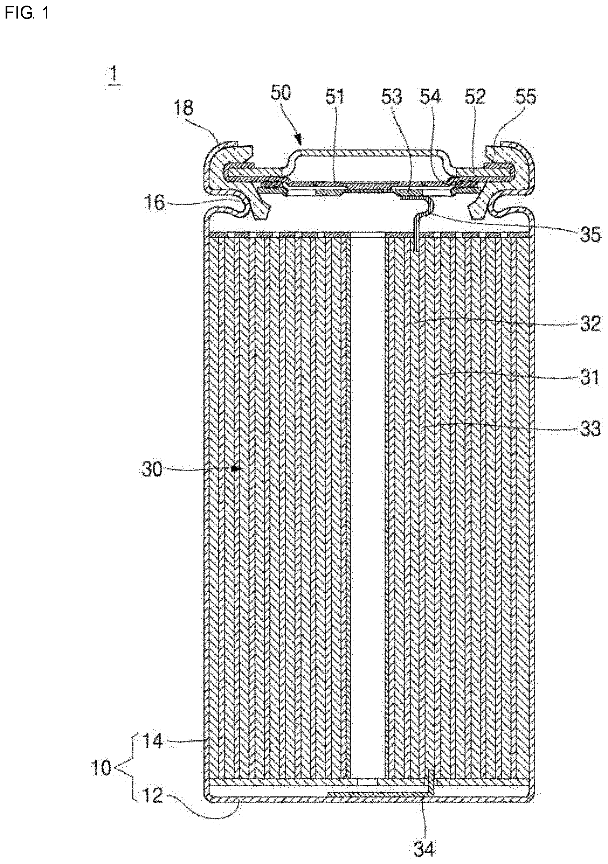

FIG. 1 is a longitudinal cross-sectional view illustrating a general cylindrical secondary battery.

As shown in FIG. 1, a general cylindrical secondary battery 1 includes a cylindrical can 10 having one end opened in the longitudinal direction, an electrode assembly 30 accommodated in the can 10, and a cap assembly 50 that seals the can 10.

The can 10 includes a circular bottom portion 12 and a side portion 14 extending upward from the bottom portion 12, and the top portion of the side portion 14 is opened. In the manufacturing process of the secondary battery 1, the electrode assembly 30 is accommodated together with an electrolyte through the opening of the can 10. The can 10 may be made of steel, a steel alloy, nickel-plated steel, a nickel-plated steel alloy, aluminum, an aluminum alloy, or equivalent thereof.

A beading part 16 and a crimping part 18 are formed on the side portion 14 to fix the cap assembly 50. The beading part 16 is formed by bending the side portion 14 concavely toward the inside of the can 10. The beading part 16 is a part on which the cap assembly 50 is seated when assembling the cap assembly 50. The crimping part 18 is formed by bending the end of the side portion 14 toward the inside of the can 10 after the cap assembly 50 is seated thereon. The crimping part 18 prevents the cap assembly 50 from being separated. The beading part 16 is spaced apart so as not to contact the electrode assembly 30.

The electrode assembly 30 includes a negative electrode plate 31 coated with a negative electrode active material (e.g., graphite, carbon, etc.), a positive electrode plate 32 coated with a positive electrode active material (e.g., transition metal oxide (LiCoO2, LiNiO2, LiMn2O4, etc.)), and a separator 33 interposed between the negative electrode plate 31 and the positive electrode plate 32 to prevent a short circuit between the negative electrode plate 31 and the positive electrode plate 32. The negative electrode plate 31 may be copper (Cu) or nickel (Ni) foil, the positive electrode plate 32 may be aluminum (Al) foil, and the separator 33 may be polyethylene (PE) or polypropylene (PP). A negative electrode tab 34 downwardly protruding a certain length is welded to the negative electrode plate 31, and a positive electrode tab 35 upwardly protruding a certain length is welded to the positive electrode plate 32. The negative electrode tab 34 is welded to the bottom portion 12 of the can 10, and the positive electrode tab 35 is welded to the cap assembly 50. Therefore, the can 10 operates as a negative electrode, and the cap assembly 50 operates as a positive electrode. The negative electrode plate 31, the positive electrode plate 32, and the separator 33 are wound in a cylindrical shape and accommodated inside the can 10.

The cap assembly 50 includes a safety vent 51, a cap-up 52 disposed above the safety vent 51, and a cap-down 53 disposed below the safety vent 51. The cap assembly 50 further includes an insulating member 54 inserted between the safety vent 51 and the cap-down 53 for insulation so as to prevent portions other than the central portion of the safety vent 51 from contacting the cap-down 53, and an insulation gasket 55 for insulating the cap assembly 50 and the can 10 from each other. In the safety vent 51, the central portion of the can 10 is in contact with the cap-down 53, and the portion supported by the insulating member 54 is spaced apart from the cap-down 53. The safety vent 51 has a notch 51a formed to discharge gas by being broken when the internal pressure rises above a certain level.

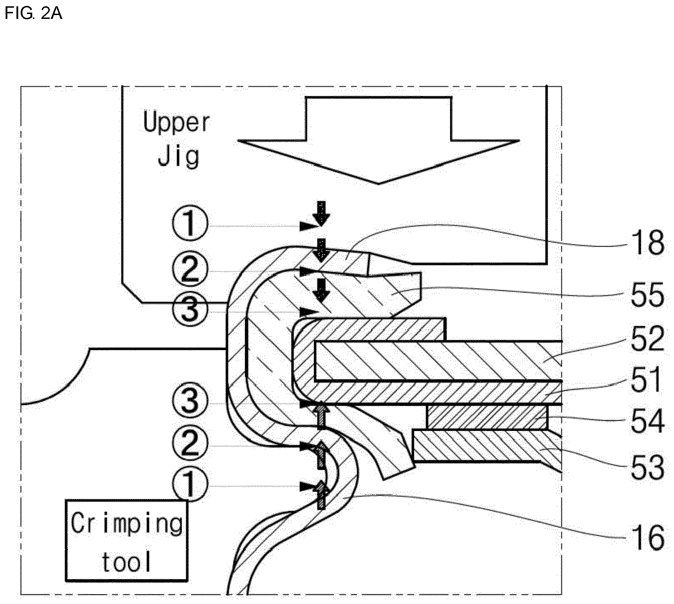

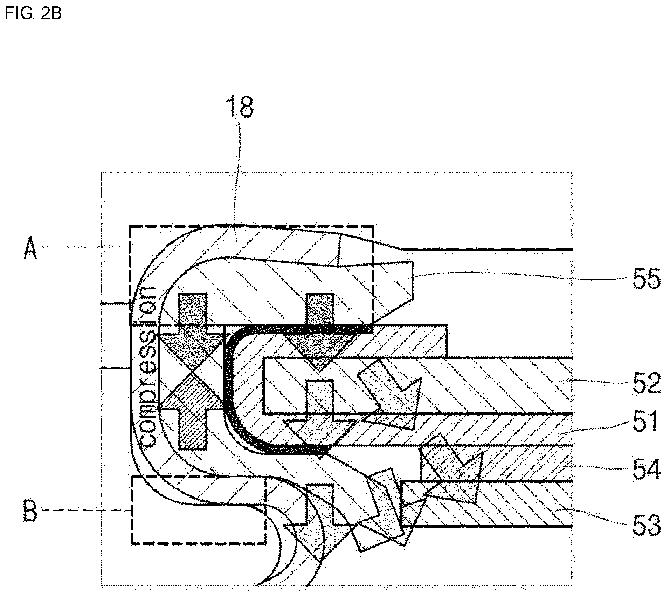

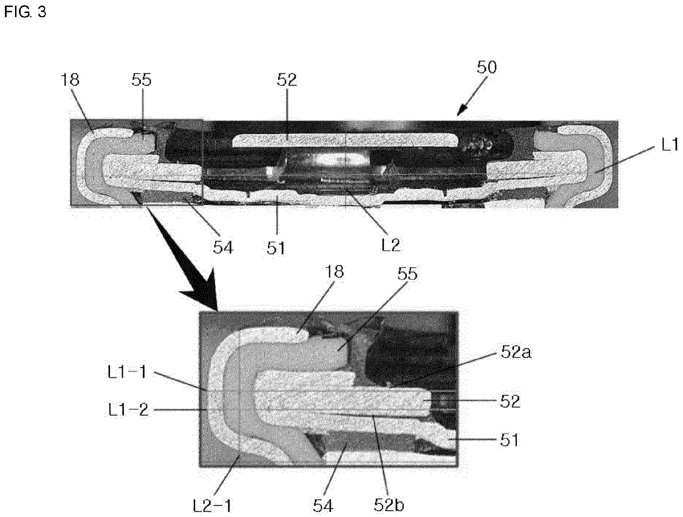

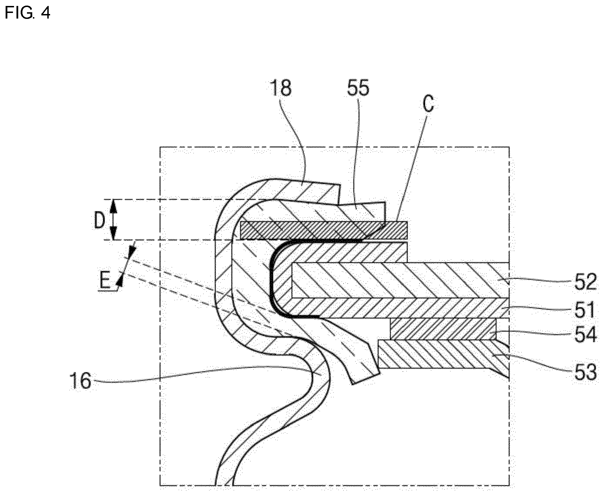

FIG. 2A is a partial cross-sectional view illustrating a direction of pressure applied when assembling a cap assembly according to FIG. 1. FIG. 2B is a partial sectional view showing the pressure distribution according to FIG. 2A in detail. FIG. 3 is a CT image showing a deformation state after assembling the cap assembly according to FIG. 1. FIG. 4 is a partial cross-sectional view illustrating compression areas of the cap assembly according to gasket positions according to FIG. 1.

As shown in FIG. 2A, in order to form the beading part 16, when the side portion 14 of the can 10 is pressed with a side portion jig, pressure is applied to the gasket 55 from the beading part 16 in the order of arrows ①, ②, and ③. In addition, in order to form the crimping part 18, when the top end of the side portion 14 is pressed with an upper jig, pressure is applied to the gasket 55 from the crimping part 18 in the order of ①, ②, and ③.

Here, region A of FIG. 2B is a region where load is generated by the pressure applied from the top, and region B is a region where stress is generated by the pressure applied from the bottom. Therefore, the gasket 55 is compressed by receiving pressure in the vertical direction. In addition, the pressure transmitted to the gasket 55 compresses the gasket 55 and is transmitted to the cap-down 53 via the safety vent 51, the cap-up 52, and the insulating member 54 in the direction of the arrow of FIG. 2B. The thus transmitted force causes the safety vent 51 and the cap-up 52 to be deformed in the downward direction.

Referring to FIG. 3, actually on the CT image of the cap assembly 50, it can be seen that the upper and lower surfaces 52a and 52b of the cap-up 52 are not parallel to guide lines L1-1 and L1-2 that are parallel to a horizontal center line L1, but sag in the downward direction. That is, the cap-up 52 is deformed in the downward direction. Due to the deformation of the cap-up 52, the safety vent 51 also receives a load and is deformed in the downward direction (In FIG. 3, the vertical guide lines L2 and L2-1 are guide lines for indicating that L1, L1-1, and L1-2 are perpendicular to the vertical guide lines.).

Referring to FIG. 4, if region D, which is the upper region of the gasket 55, is compressed by 7%, compared to before deformation, region E, which is the lower region of the gasket 55, exhibits a compressibility of 54%, compared to before deformation. That is, the lower region, region E, may receive a relatively large amount of pressure. This is because there is a difference in the contact area between the gasket 55 and the safety vent 51 (the part indicated by the thick line in FIG. 4 being a contact part), and the lower part, which has a smaller contact area with other parts, may receive a greater load. Therefore, part deformation (denting) occurs in the direction of the small contact area, and the parts may sag.

As described above, when the cap assembly 50 is deformed, the stability and reliability of the secondary battery 1 may deteriorate. Therefore, in order to solve this problem, in the present embodiment, proposed is a gasket 500 having a novel shape in which, in the upper region of the gasket 55, which is a region having a relatively large contact area, the shape of region C in contact with the safety vent 51, is changed (Detailed descriptions of the same structures as those of FIGS. 1 to 4 will be omitted.). In an embodiment, an upper portion of the gasket has a smaller thickness than a thickness of a lower portion, the respective thicknesses being in the thicknesses in direction away from the electrode assembly after the bending of the gasket. The terms upper and lower are defined as being wherein the upper portion is further from the electrode assembly than the lower portion prior to the bending of the gasket. In an embodiment, the upper and lower portions are portions of the side portion, and the boundary between them is the bending position of the gasket, as defined below at paragraph 0050. In an embodiment, the gasket has a shape in which the thickness of the upper portion decreases toward an end portion. The end portion is an end of the gasket which is farthest from the electrode assembly, prior to the bending of the gasket.

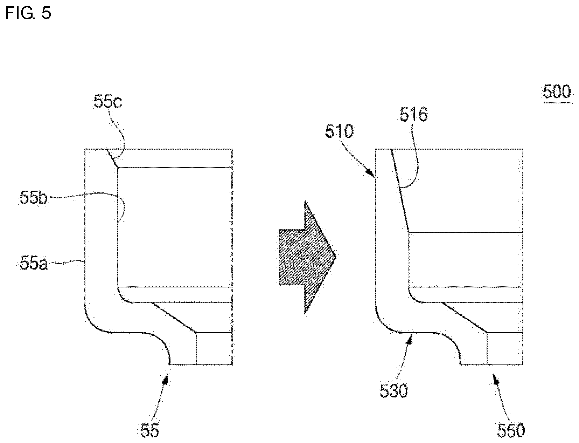

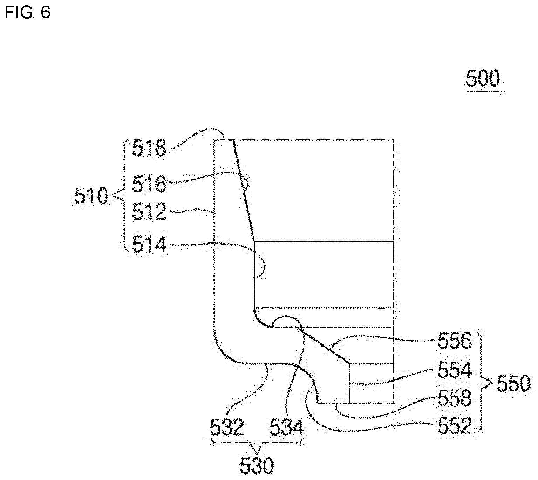

FIG. 5 is a partial perspective view for comparing a gasket according to FIGS. 1 to 4 and a gasket according to an embodiment of the present disclosure. FIG. 6 is a partial perspective view showing a detailed structure of a gasket according to an embodiment of the present disclosure.

As shown in FIGS. 1 and 5, the gasket 55 has a substantially ring shape to surround and support the edges of the safety vent 51 and the cap-up 52. The gasket 55 has an outer circumferential surface 55a and an inner circumferential surface 55b, and an upper surface of the inner circumferential surface 55b is partially chamfered to have a short inclined surface 55c. However, the gasket 500 according to an embodiment of the present disclosure has a shape chamfered to have a long inclined surface 516 compared to the short inclined surface 55c formed on the inner circumferential surface 55b of the gasket 55.

As shown in FIG. 6, the gasket 500 of the present embodiment has a substantially ring shape and includes a body 510 having a predetermined length along the vertical direction, a connection portion 530 that is bent substantially vertically from the body 510. and an extension portion 550 that extends approximately vertically downward from the connection portion 530. Here, the expression 'substantially vertical' means that the angles between the body 510 and the connecting portion 530 and between the connecting portion 530 and the extension portion 550 are vertical or close to vertical, but are not limited to these angles.

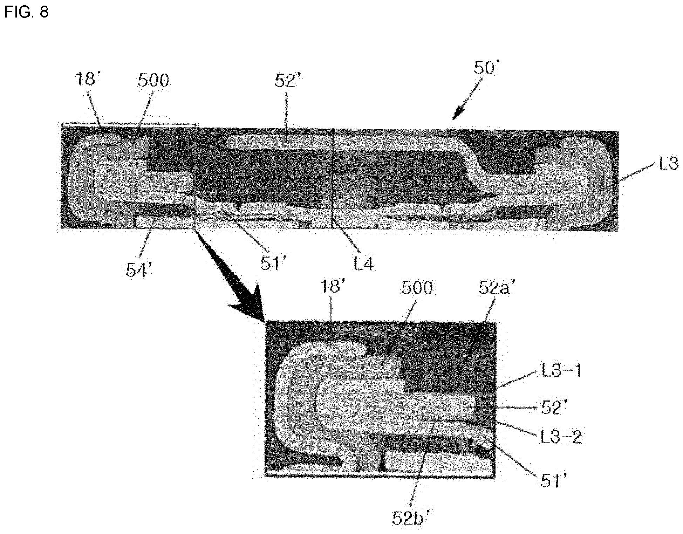

The body 510 may include an outer circumferential surface 512 that is flat in the vertical direction, an inner circumferential surface 514 and an inclined surface 516 inside the outer circumferential surface 512, and an upper surface 518 connecting the outer circumferential surface 512 and the inclined surface 516. The outer circumferential surface 512 is a surface in contact with the side portion 14 of the can 10, like the gasket 55 of FIG. 1. The inner circumferential surface 514 is a portion in close contact with the edges of the safety vent (51', see FIG. 8) and the cap-up (52', see FIG. 8), and refers to the lower part of the outer circumferential surface 512 that is roughly bisected in the vertical direction. When the gasket 500 is bent, only a portion of the upper side of the inner circumferential surface 514 is bent so as to come into contact with the upper portion of the safety vent 51'. The inclined surface 516 refers to the upper part of the outer circumferential surface 512 that is roughly bisected in the vertical direction. The inclined surface 516 is a surface formed in an inclined shape by chamfering the part that was previously the inner circumferential surface. The inclined surface 516 has a shape in which the distance (the thickness of body) from the outer circumferential surface 512 decreases toward the upper side. That is, the gasket 500 is characterized in that the thickness of the upper part in the direction away from the electrode assembly 30 is smaller than the thickness of the lower part (a portion where the connection part and the extension part are located). In addition, the gasket 500 is characterized by having an upper thickness that decreases toward the top end thereof.

The connection portion 530 is a portion that is bent substantially vertically from the body 510 to have a predetermined length in the horizontal direction again. The connection portion 530 has an outer surface 532 and an inner surface 534, and the distance between the outer surface 532 and the inner surface 534 (the thickness of the connection portion) may be equal to or similar to the distance between the outer circumferential surface 512 and the inner circumferential surface 514 of the body 510.

The extension portion 550 is a portion that is bent substantially vertically at an end of the connection portion 530 and extends downward to have a predetermined length. The extension portion 550 has an outer circumferential surface 552 and an inner circumferential surface 554, an inclined connection surface 556 connected to the inner surface 534 of the connection portion 530, and a lower surface 552 connecting the outer circumferential surface 552 and the inner circumferential surface 554.

The body 510, the connection portion 530, and the extension portion 550 have been separately described above, but this is only for clearly showing the structure. The body 510, the connection portion 530, and the extension portion 550 are integrally formed, and the gasket 500 is shaped of a ring connected as a whole.

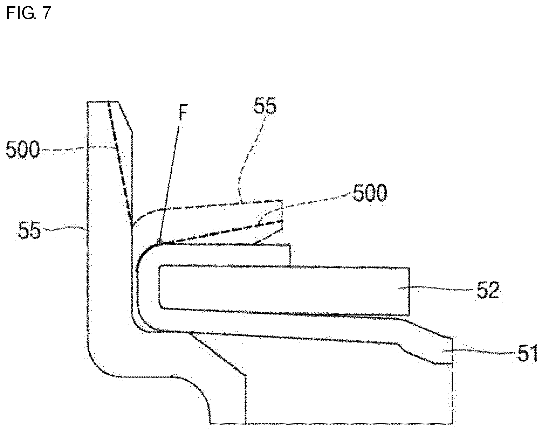

FIG. 7 is a view comparing bending states of the gasket according to FIGS. 1 to 4 and the gasket according to an embodiment of the present disclosure.

As shown in FIG. 7, unlike the conventional gasket 55, the gasket 500 according to the present embodiment may form an inclined surface in the shape in which chamfering starts from a bending position F to the top. Here, the bending position F is a position where when the gasket 500 forms a beading part (see FIG. 2) to surround the edges of the safety vent 51 and the cap-up 52, the gasket 500 is bent to start to contact the upper surface of the safety vent 51'. That is, the bending position F means a point where a flat straight section starts at the part where the safety vent 51' is bent, the flat straight portion terminating at the end portion of the gasket, the end portion being an end of the gasket which is farthest from the electrode assembly, prior to the bending of the gasket. The reason why the inclined surface 516 is formed by chamfering from this part to the upper surface is to minimize the transmission of pressure that is downwardly applied to the gasket 500 to other parts by reducing the contact area where the upper part of the gasket 55 comes into contact with the safety vent 51', as described in FIG. 4.

As described above, by forming a relatively longer inclined surface 516 than the existing gasket 55, compression and deformation of the gasket 500 due to can processing may be minimized by reducing the upper thickness of the gasket 500 (the thickness of the body 510). Accordingly, deformation of parts of the cap assembly may be prevented.

FIG. 8 is a CT image showing a state after assembling a cap assembly according to an embodiment of the present disclosure.

Referring to FIG. 8, actually on the CT image of a cap assembly 50', it can be seen that an upper surface 52a' and a lower surface 52b' of a cap-up 52' are parallel to guide lines L3-1 and L3-2 that are parallel to a horizontal center line L3. That is, even with the formation of a beading part 18', the cap-up 52' is not deformed in the downward direction. Since the cap-up 52' is not deformed, the safety vent 51' is not deformed, suggesting that parts of the cap assembly 50' are not deformed (In FIG. 8, the vertical guide line L4 is a guide line for indicating that L3, L3-1, and L3-2 are perpendicular to the vertical guide line.).

As described above, according to the embodiment of the present disclosure, by improving the shape of a gasket, parts, such as a cap-up, a safety vent, etc., are not deformed by pressure when forming a crimping part and a beading part in a can for assembling of a cap assembly. Accordingly, the stability of the secondary battery may be improved.

In an embodiment of the present disclosure, by improving the shape of a gasket, parts, such as a cap-up, a safety vent, etc., may not be deformed by pressure when forming a crimping part and a beading part in a can for assembling of the cap assembly, thereby improving the stability of secondary battery.

While the foregoing embodiment is only one embodiment for carrying out the present disclosure, which is not limited to the embodiment, it will be understood by a person skilled in the art that various changes in form and details may be made therein without departing from the scope of the present disclosure as defined by the following claims.

## Claims

1. A cylindrical secondary battery comprising:
a cylindrical can having a circular bottom portion, a side portion extending from the bottom portion, a beading part that is concavely formed at one end of the side portion, a crimping part that is formed by bending the end of the side portion;
an electrode assembly accommodated in the can; and
a cap assembly that seals the can and has a gasket for insulation from the can,
wherein an upper portion of the gasket in a direction away from the electrode assembly has a smaller thickness than a lower portion in a direction of the electrode assembly.

2. The cylindrical secondary battery of claim 1, wherein the gasket has a shape in which the thickness of the upper portion decreases toward an end portion.

3. The cylindrical secondary battery of claim 1 or claim 2, wherein the gasket has a ring-shaped body, a connection portion extending from the body, and an extension portion extending downward from the connection portion, and the thickness of the body decreases toward an end portion.

4. The cylindrical secondary battery of any preceding claim, wherein the cap assembly includes a cap-up disposed between the crimping part and the beading part, a safety vent disposed below the cap-up, and a cap-down disposed below the safety vent and electrically connected to the electrode assembly, and the gasket is configured to insulate the safety vent and the cap-up from the can.

5. The cylindrical secondary battery of claim 4, wherein a lower surface of an edge of the safety vent is in close contact with an upper surface of the cap-up, and the gasket is bent to surround the edge of the safety vent.

6. The cylindrical secondary battery of claim 5, wherein the gasket has an inclined surface that is chamfered on an inner circumferential surface of the body.

7. The cylindrical secondary battery of claim 6, wherein the inclined surface is in close contact with an upper surface of the edge of the safety vent.

8. The cylindrical secondary battery of claim 6 or claim 7, wherein a bending position (F) of bent upper surfaces of the safety vent, at which the straight section starts, corresponds to a starting position of the inclined surface.
